# EUROPÄISCHE PATENTSCHRIFT

(11) **EP 1 527 918 B1**
(45) Veröffentlichungstag und Bekanntmachung des Hinweises auf die Patenterteilung: **14.06.2006**
(21) Anmeldenummer: 04021732.5
(22) Anmeldetag: 13.09.2004
(51) Int. Cl.: B60H 1/32

(54) **Verfahren zur Regelung einer Kraftfahrzeug-Klimaanlage**
Method for controlling a vehicle air conditioning device
Procédé de contrôle d'une climatisation de véhicule

(30) Priorität: 29.10.2003 DE 10350803
(43) Veröffentlichungstag der Anmeldung: 04.05.2005
(73) Patentinhaber: Behr GmbH & Co. KG, 70469 Stuttgart (DE)
(72) Erfinder: Baruschke, Wilhelm, 73117 Wangen (DE); Britsch-Laudwein, Armin, 71272 Renningen (DE); Lochmahr, Karl, 71665 Vaihingen (DE)
(74) Vertreter: Grauel, Andreas

(56) Entgegenhaltungen:
- EP-A- 1 314 594
- US-A- 4 470 270
- US-A- 4 483 151
- US-A- 5 408 841
- US-A1- 2004 089 004

## Beschreibung

Die Erfindung betrifft ein Verfahren zur Regelung eines Kraftfahrzeug-Klimaanlage, gemäß dem Oberbegriff des Anspruchs 1.

Insbesondere in der Fahrzeugoberklasse, wie Luxusfahrzeuge, oder bei Vans oder Geländewagen werden Klimaanlagen mit zwei Verdampfern verwendet, wie zum Beispiel aus US 4 470 270, das als nächstliegender Stand der Technik gesehen wird, offenbart ist. Deren Regelung lässt jedoch noch Wünsche in Hinblick auf einen möglichst geringen Energieverbrauch offen.

Es ist Aufgabe der Erfindung, ein verbessertes Verfahren zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche.

Erfindungsgemäß ist ein Verfahren zur Regelung einer Kraftfahrzeug-Klimaanlage vorgesehen, wobei die Kraftfahrzeug-Klimaanlage einen Kältemittel-Kreislauf mit mindestens zwei Verdampfern mit je einem, einem Verdampfer zugeordneten Expansionsorgan sowie einem Kältemittel-Absperrventil, einen Kondensator und einen Kältemittelverdichter, der extern regelbar ist und ein variables Hubvolumen hat, aufweist, gemäß dem die mindestens zwei Verdampfer über eine gemeinsame Steuerung geregelt werden, wobei die Regelung über innere Verdampfertemperatur-Regelkreise erfolgt. Eine derartige Regelung ermöglicht einen geringen Energieverbrauch, so dass der Kraftstoffverbrauch gesenkt werden kann. Der energetische Vorteil resultiert aus wenigstens einer Verdampfertemperatur, die zumindest zeitweise höhere Werte als die Minimaltemperatur von üblicherweise 2°C annimmt, was sich in kleineren Hubvolumen des Kältemittelverdichters niederschlägt, wodurch sich ein reduziertes Lastmoment einstellt. Ferner ist eine Einstellung der optimalen Innenraumfeuchte in allen Zonen des Fahrzeuginnenraums möglich. Dadurch, dass mehrere Verdampfer vorgesehen sind, ist eine individuelle Klimatisierung in jeder Zone möglich.

Bei der erfindungsgemäßen Steuerung sind vorzugsweise die einzelnen Verdampfertemperatur-Regelkreise voneinander unabhängig, wobei jede Verdampfertemperatur bevorzugt getrennt geregelt wird. Die Verdampfertemperaturregelung erfolgt vorzugsweise mittels eines PI-Reglers.

Bevorzugt steuert das Regler-Ausgangssignal zur Regelung der Verdampfertemperatur, welches den höchsten Wert hat, den gemeinsamen Kältemittelverdichter.

Der Kältemittelverdichter wird vorzugsweise mittels einer Pulsweitenmodulation gesteuert.

Vorzugsweise sind Kältemittel-Absperrventile vorgesehen, die jedem Verdampfer bzw. Expansionsorgan zugeordnet sind, wobei die Kältemittel-Absperrventile bevorzugt nach einer zwei-Punkt-Regelung geregelt werden.

Neben zwei der Klimatisierung des Fahrzeuginnenraums dienenden Verdampfern kann beispielsweise auch ein Verdampfer für eine Kühlbox Teil des Kältemittel-Kreislaufs sein. Dabei kann die Temperierung der Kühlbox durch einen Teilluftstrom über den Verdampfer erfolgen, der einer Innenraumzone, z.B. dem Fondbereich, zugeordnet ist. Varianten mit Funktionskoppelung von Fondraumklimatisierung und Kühlbox denkbar, sowie unabhängige Betriebsarten. Außerdem kann die Kühlbox mit einem eigenen Temperatursensor ausgestattet sein. Für die Verdampfertemperatur-Sollwertvorgabe ist die Kühlbox mit zu berücksichtigen (allerdings über die äußere Verdampfertemperaturregelung).

Im Folgenden wird die Erfindung anhand eines Ausführungsbeispiels unter Bezugnahme auf die Zeichnung im Einzelnen erläutert. In der Zeichnung zeigen:
- Fig. 1: ein Blockschaltbild, das den inneren Verdampfertemperatur-Regelkreis einer Klimaanlage mit n Verdampfern schematisch darstellt,
- Fig. 2: ein Funktionsdiagramm einer Kältemittelverdichter-Steuerung (Kompressor-Pulsweitenmodulation in % über Regler-Stellgröße in %), und
- Fig. 3: ein Funktionsdiagramm einer Kältemittel-Absperrventil-Ansteuerung (Kältemittel-Ventil ein/aus in % über Regler-Stellgröße in %).

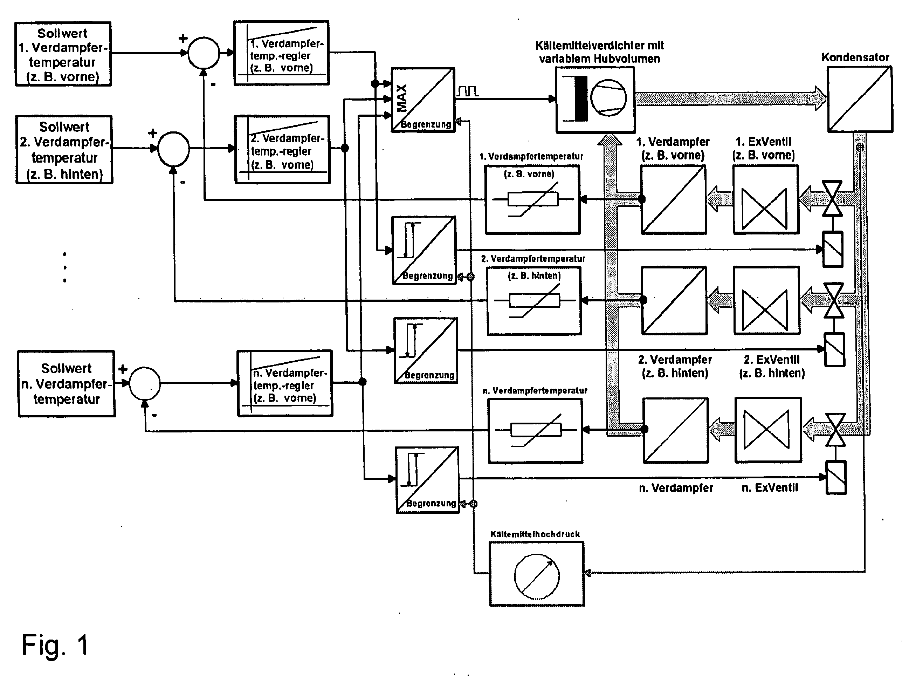

Eine Kraftfahrzeug-Klimaanlage weist gemäß dem Ausführungsbeispiel einen Kältemittel-Kreislauf 1 mit zwei Verdampfern 2, nämlich einen vorn im Kraftfahrzeug angeordneten vorderen Verdampfer (Teil des Front-Klimageräts, welches die Temperierung des Frontbereichs übernimmt) und einen hinten im Kraftfahrzeug angeordneten hinteren Verdampfer (Teil des Fond- bzw. Heck-Klimageräts, welches die Temperierung des Fondbereichs übernimmt), denen je ein Expansionsorgan vorgeschaltet ist, einen Kältemittelverdichter 3 mit variablem Hubvolumen und einen Kondensator 4 auf, die über eine gemeinsame Steuerung 5 geregelt werden. Dabei erfolgt die Regelung gemäß dem in Fig. 1 dargestellten Blockschaltbild über voneinander unabhängige innere Verdampfertemperatur-Regelkreise, wobei vorliegend nur die "1. Verdampfertemperatur"-Regelung und die "2. Verdampfertemperatur"-Regelung relevant ist. Um eine Überschreitung des zulässigen Drucks zu vermeiden, ist eine Kältemittel-Hochdruck-Überwachung 6 vorgesehen, welche im Blockschaltbild unten schematisch angedeutet ist.

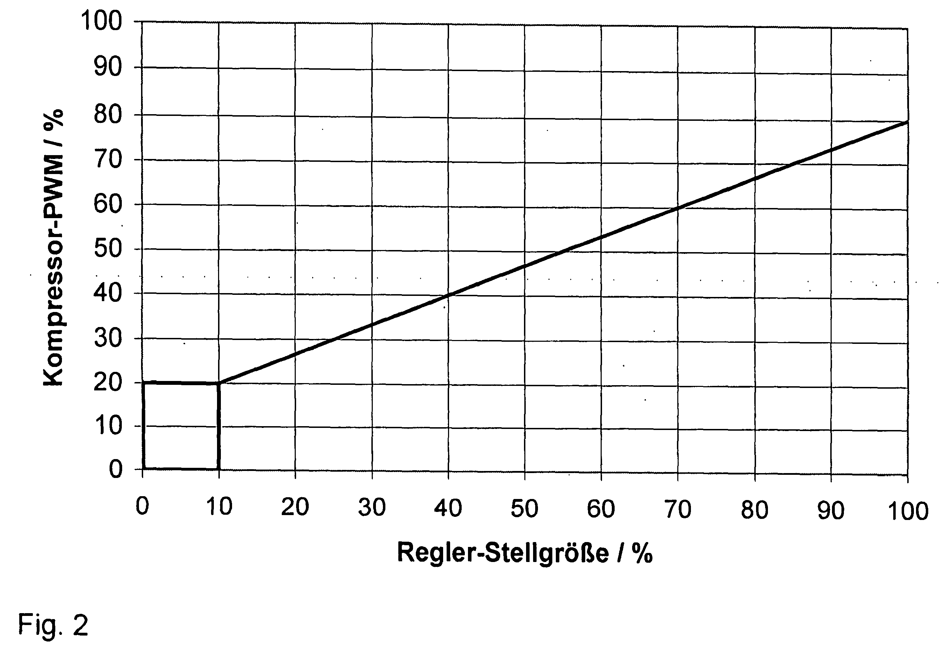

Entsprechend dem Blockschaltbild von Fig. 1 wird jede Verdampfertemperatur getrennt geregelt, vorliegend mittels je eines PI-Reglers 7. Das Regler-Ausgangssignal (Kompressor-Stellsignal nach Fig. 2), welches den höchsten Wert hat, steuert den Kältemittelverdichter mit variablem Hubvolumen. Durch diese Regelung erfolgt automatisch eine individuelle Ansteuerung der Kältemittel-Absperrventile 8, so dass jede Verdampfertemperatur (1 und 2) ihren vorgegebenen Sollwert annimmt.

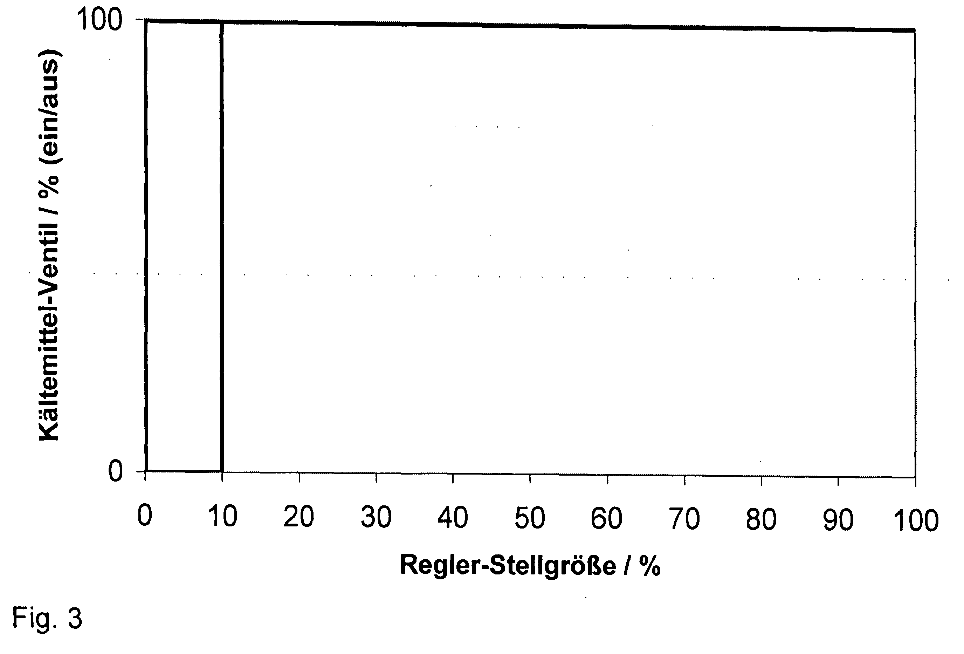

Die Kältemittel-Absperrventile 8 sind vorliegend zwei-Punkt-geregelt, wie in Fig. 3 dargestellt, was der einfachsten Regelung entspricht.

Die äußeren Verdampfertemperatur-Regelkreise mit den Verdampfertemperatur-Sollwerten als Ausgangsgrößen werden auf bekannte Weise entsprechend Klimaanlagen mit einem Verdampfer aus Außentemperatur, ggf. Innenraumfeuchte, Scheibentemperatur und anderen Signalen derart berechnet, dass energetisch vorteilhaft eine komfortable Klimatisierung gewährleistet ist.

In dem Fahrzeuginnenraum sind oftmals zwei Zonen funktional von einem Verdampfer 2 abhängig, z.B. Fahrer- und Beifahrerzone im Frontbereich. Bei unterschiedlichem Zonen-Status, bedingt durch unterschiedliche Sollwerteinstellung oder unterschiedliche, beispielsweise asymmetrische, Sonneneinstrahlung, sind unterschiedliche Austrittstemperaturen je Zone erforderlich. Dabei muss die gemeinsame Verdampfertemperatur auf den tieferen Wert eingestellt werden, die Austrittstemperaturen der anderen Zone werden mittels Reheat angehoben.

### Bezugszeichenliste

- 1: Kältemittel-Kreislauf
- 2: Verdampfer
- 3: Kältemittelverdichter
- 4: Kondensator
- 5: Steuerung
- 6: Kältemittel-Hochdruck-Überwachung
- 7: PI-Regler
- 8: Kältemittel-Absperrventil

## Patentansprüche

1. Verfahren zur Regelung einer Kraftfahrzeug-Klimaanlage mit einem Kältemittel-Kreislauf (1), der mindestens zwei Verdampfer (2) mit je einem, einem Verdampfer (2) zugeordneten Expansionsorgan sowie einem Kältemittel-Absperrventil (8), einen Kondensator (4) und einen Kältemittelverdichter (3), der extern regelbar ist und ein variables Hubvolumen hat, aufweist, **dadurch gekennzeichnet, dass** die mindestens zwei Verdampfer (2) über eine gemeinsame Steuerung (5) geregelt werden, wobei die Regelung über innere Verdampfertemperatur-Regelkreise erfolgt.

2. Verfahren nach Anspruch 1, **dadurch gekennzeichnet, dass** die einzelnen Verdampfertemperatur-Regelkreise voneinander unabhängig sind.

3. Verfahren nach Anspruch 2, **dadurch gekennzeichnet, dass** jede Verdampfertemperatur getrennt geregelt wird.

4. Verfahren nach Anspruch 3, **dadurch gekennzeichnet, dass** die Verdampfertemperaturen mittels je eines PI-Reglers (7) geregelt werden.

5. Verfahren nach Anspruch 3 oder 4, **dadurch gekennzeichnet, dass** das Regler-Ausgangssignal zur Regelung der Verdampfertemperatur, welches den höchsten Wert hat, den gemeinsamen Kältemittelverdichter (3) steuert.

6. Verfahren nach einem der vorhergehenden Ansprüche, **dadurch gekennzeichnet, dass** der Kältemittelverdichter (3) mittels einer Pulsweitenmodulation gesteuert wird.

7. Verfahren nach einem der vorhergehenden Ansprüche, **dadurch gekennzeichnet, dass** Kältemittel-Absperrventile (8) vorgesehen sind, die jedem Verdampfer (2) bzw. Expansionsorgan zugeordnet sind, wobei die Kältemittel-Absperrventile (8) nach einer zwei-Punkt-Regelung geregelt werden.

8. Kraftfahrzeug-Klimaanlage mit einem Kältemittel-Kreislauf (1), der mindestens zwei Verdampfer (2) mit je einem einem Verdampfer (2) zugeordneten Expansionsorgan sowie einem Kältemittel-Absperrventil (8), einen Kondensator (4) und einen Kältemittelverdichter (3), der extern regelbar ist und ein variables Hubvolumen hat, aufweist, wobei die mindestens zwei Verdampfer (2) eine gemeinsame Steuerung (5) aufweisen und die Regelung über innere Verdampfertemperatur-Regelkreise erfolgt.

9. Kraftfahrzeug-Klimaanlage nach Anspruch 8, **dadurch gekennzeichnet, dass** Kältemittel-Absperrventile (8) vorgesehen sind, die jedem Verdampfer (2) bzw. Expansionsorgan zugeordnet sind.

10. Kraftfahrzeug-Klimaanlage nach Anspruch 8 oder 9, **dadurch gekennzeichnet, dass** eine Kältemittel-Hochdruck-Überwachung (6) vorgesehen ist.

## Claims

1. Method for the regulation of a motor vehicle air-conditioning unit having a coolant medium circuit (1) which comprises at least two evaporators (2) each with an expansion element associated with an evaporator (2) and a coolant medium cutoff valve (8), a condenser (4) and a coolant medium compressor (3) which can be regulated externally and has a variable stroke volume, **characterised in that** the at least two evaporators (2) are regulated by common control means (5) such that their regulation is effected by virtue of internal evaporator temperature regulation circuits.

2. Method according to Claim 1, **characterised in that** the individual evaporator temperature regulation circuits are independent of one another.

3. Method according to Claim 2, **characterised in that** each evaporator temperature is regulated separately.

4. Method according to Claim 3, **characterised in that** the evaporator temperatures are regulated in each case by means of a PI regulator (7).

5. Method according to Claims 3 or 4, **characterised in that** whichever regulator output signal for regulating the evaporator temperature has the highest value, controls the common coolant medium compressor (3).

6. Method according to any of the preceding claims, **characterised in that** the coolant medium compressor (3) is controlled by pulse width modulation.

7. Method according to any of the preceding claims, **characterised in that** coolant medium cutoff valves (8) are provided, which are associated with each respective evaporator (2) or expansion element, such that the coolant medium cutoff valves (8) are regulated in accordance with a two-point regulation system.

8. Motor vehicle air-conditioning unit with a cooling medium circuit which comprises at least two evaporators (2) each with an expansion element associated with an evaporator (2) and a coolant medium cutoff valve (8), a condenser (4) and a coolant medium compressor (3) which can be regulated externally and has a variable stroke volume, such that the at least two evaporators (2) have a common control system (5) and regulation takes place by means of internal evaporator temperature regulation circuits.

9. Motor vehicle air-conditioning unit according to Claim 8, **characterised in that** coolant medium cutoff valves (8) are provided, which are associated with each respective evaporator (2) or expansion element.

10. Motor vehicle air-conditioning unit according to Claims 8 or 9, **characterised in that** a coolant medium high-pressure monitoring system (6) is provided.

## Revendications

1. Procédé de régulation d'un système de climatisation d'un véhicule automobile, comprenant un circuit (1) de fluide frigorigène qui présente au moins deux évaporateurs (2) comprenant chacun un organe d'expansion associé à un évaporateur (2), ainsi qu'une soupape d'arrêt (8) du fluide frigorigène, un condenseur (4) et un compresseur de fluide frigorigène (3) qui est réglable extérieurement et a une cylindrée variable,
**caractérisé en ce que** les évaporateurs (2), au moins au nombre de deux, sont régulés par une commande commune (5), où la régulation est effectuée par des circuits, intérieurs, de régulation de température des évaporateurs.

2. Procédé selon la revendication 1, **caractérisé en ce que** les différents circuits de régulation de température des évaporateurs sont indépendants les uns des autres.

3. Procédé selon la revendication 2, **caractérisé en ce que** chaque température d'évaporateur est régulée séparément.

4. Procédé selon la revendication 3, **caractérisé en ce que** les températures des évaporateurs sont régulées à chaque fois au moyen d'un régulateur - PI - proportionnel et intégral (7).

5. Procédé selon la revendication 3 ou 4, **caractérisé en ce que** le signal de sortie du régulateur, servant à la régulation de la température de l'évaporateur et ayant la valeur maximale, commande le compresseur de fluide frigorigène commun (3).

6. Procédé selon l'une quelconque des revendications précédentes, **caractérisé en ce que** le compresseur de fluide frigorigène (3) est commandé par modulation d'impulsions en largeur.

7. Procédé selon l'une quelconque des revendications précédentes, **caractérisé en ce qu'**il est prévu des soupapes d'arrêt (8) du fluide frigorigène qui sont associées à chaque évaporateur (2) ou à chaque organe d'expansion, où les soupapes d'arrêt (8) du fluide frigorigène sont régulées suivant une régulation tout ou rien.

8. Système de climatisation d'un véhicule automobile comprenant un circuit (1) de fluide frigorigène qui présente au moins deux évaporateurs (2) comprenant chacun un organe d'expansion associé à un évaporateur (2), ainsi qu'une soupape d'arrêt (8) du fluide frigorigène, un condenseur (4) et un compresseur de fluide frigorigène (3) qui est réglable extérieurement et a une cylindrée variable, où les évaporateurs (2), au moins au nombre de deux, présentent une commande commune (5), et la régulation est effectuée par des circuits, intérieurs, de régulation de température des évaporateurs.

9. Système de climatisation d'un véhicule automobile selon la revendication 8, **caractérisé ce qu'**il est prévu des soupapes d'arrêt (8) du fluide frigorigène qui sont associées à chaque évaporateur (2) ou à chaque organe d'expansion.

10. Système de climatisation d'un véhicule automobile selon la revendication 8 ou 9, **caractérisé ce qu'**il est prévu un contrôle (6) de mise sous haute pression du fluide frigorigène.
